Europäisches Patentamt

European Patent Office

Office européen des brevets

(19)

(11) Publication number: **0 224 184**
A1

(12) **EUROPEAN PATENT APPLICATION**

(21) Application number: 86115976.2

(22) Date of filing: 18.11.86

(51) Int. Cl.⁴: **B 60 C 1/00**
**C 08 K 3/04**

(30) Priority: 20.11.85 US 800009

(43) Date of publication of application:
03.06.87 Bulletin 87/23

(84) Designated Contracting States:
AT BE CH DE FR GB IT LI LU NL SE

(71) Applicant: The Uniroyal Goodrich Tire Company
600 South Main Street
Akron, Ohio 44318(US)

(72) Inventor: Sperley, Richard Jon
5168 Hale Court
Troy Michigan, 48098(US)

(74) Representative: von Kreisler, Alek, Dipl.-Chem. et al,
Deichmannhaus am Hauptbahnhof
D-5000 Köln 1(DE)

(54) Tire tread composition containing ground coal.

(57) A tire tread composition is provided comprising (a) a natural rubber, a conjugated diolefin polymer synthetic rubber, a nonconjugated polyene-containing synthetic rubber or mixtures thereof; and (b) from about 1 to about 70 parts ground coal per 100 parts rubber, the coal having a particle size distribution such that at least about 90 weight percent of such coal will pass through a 25 mesh screen. Tires having tread comprised of such a composition exhibit excellent wet and dry tractive properties and low rolling resistance.

EP 0 224 184 A1

D-5877

# TIRE TREAD COMPOSITION CONTAINING GROUND COAL

## FIELD OF THE INVENTION

This invention relates to an improved tire tread composition comprising ground coal as a filler. In another aspect, this invention relates to a tire having treads comprised of such composition, which tire exhibits excellent wet and dry tractive properties, even ablative wear and low rolling resistance.

## BACKGROUND OF THE INVENTION

With the advent of belted-radial ply tire construction, the duration of the useable life of tires has been dramatically increased over prior art tires of a bias or a belted-bias ply construction. However, such ever-increasing life of radial tire places increasing demands on the internal components of the tire. In order to balance such demands, it is desirable to increase tread wear by some slight degree in order to maintain high standards of consumer safety by encouraging replacement of tires after an acceptably long life.

However, the production of such a tire is not easily accomplished as many of the conventional additives which have been employed in bias ply tires to provide such moderately increased tread wear are unacceptable in radial tires as they adversely affect the operation or tractive properties of such tire. In the case of bias ply tires the most frequently applied approach to balance the tread life with the tractive properties of the tire is to add higher loadings of extender oils to the tread compound. However, this approach is precluded for radial ply construction tires, especially those featuring wire breakers, because of the adverse effect on wire adhesion from migration and equilibration of the oil throughout the tires.

A second common approach that has been employed to balance tread life in bias ply tires involves the use of non-reinforcing mineral fillers or reclaimed rubber as a partial filler in the tread stock. However, the incorporation of such non-reinforcing mineral fillers (such as clay, calcium carbonate, talc, and the like) or reclaimed rubber and ground scrap rubber significantly increases hysteresis of the tread. Consequently, this produces a hotter running tire which may possess too short of a useful lifetime.

It would therefore be desirable to possess a tire tread composition which provides suitably long tread life coupled with desirable traction and low rolling resistance.

Accordingly, it is an object of this invention to provide a tire tread composition which exhibits excellent wet and dry tractive properties coupled with low rolling resistance.

It is an additional object of this invention to provide a tire tread composition that provides a suitably long tread life.

It is also an object of this invention to provide a tire tread composition that builds up less heat when mixed, extruded, or calendered.

These and other objects will become apparent from the following description and accompanying Examples.

## SUMMARY OF THE INVENTION

The present invention achieves the foregoing objectives and provides a tire tread composition which exhibits excellent wet and dry tractive properties and low rolling resistance. Specifically, the present invention provides a tire tread composition comprising: (a) a suitable rubber and (b) from about 1 to about 70 parts ground coal per 100 parts rubber, the ground coal having a particle size distribution such that at least about 90 weight percent will pass through a 25 mesh screen. This invention is further directed to a tire comprising such tread composition.

## DETAILED DESCRIPTION OF THE INVENTION

In one aspect, this invention is directed to a tire tread composition comprising:

(a)  a suitable rubber; and

(b)  from about 1 to about 70 parts ground coal per 100 parts rubber, said coal having a particle size

distribution such that at least about 90 weight percent of such coal will pass through a 25 mesh screen.

In another aspect, this invention is directed to a tire having a tread comprised of a composition comprising:

(a) a suitable rubber; and

(b) from about 1 to about 70 parts ground coal per 100 parts rubber, said coal having a particle size distribution such that at least about 90 weight percent of such coal will pass through a 25 mesh screen.

The present invention uses powdered ground coal as a partial, non-reinforcing filler in elastomeric tire tread stocks. Blending 1 to 70 parts of the powdered ground coal per one hundred parts rubber, (optionally) together with one or more of the rubber compounding ingredients normally used in tire compounding (such as carbon black, zinc oxide, extender oils, antidegradients, vulcanization accelerators and sulfur) provides an elastomeric compound which exhibits low Tan δ values. Thus, the tread composition of the present invention will provide tires with low rolling resistance and excellent tractive and handling properties.

Suitable rubbers which may be employed in the tire tread compositions of the present invention include natural (Hevea) rubber, conjugated polyene polymer synthetic rubbers and nonconjugated polyene containing synthetic rubbers. Moreover, mixtures of such rubbers, including their reclaims, may also be employed.

Suitable conjugated diolefin polymer synthetic rubbers include polymers of butadienes-1,3, such as butadiene-1,3/isoprene, 2,3-dimethylbutadiene-1,3/ isoprene, 2,3-dimethylbutadiene-1,3, and polymers of mixtures thereof. Moreover, copolymers of one or more of such butadienes-1,3 with one or more other polymerizable compounds which are capable of forming rubber copolymers with butadienes-1,3 may also be employed. For example, butadiene-1,3 may be copolymerized with monomers which are aryl olefins, such as styrene, vinyl toluene, alpha methyl styrene, chlorostyrene, dichlorostyrene, vinyl naphthalene and the like; alpha-methylene carboxylic acids and their esters, nitriles and amides, such as acrylic acid, methyl acrylate, methyl methacrylate, acrylonitrile, methacrylonitrile, methacrylamide and the like; vinyl pyridines, such as 2-vinyl pyridine, 2-methyl-5-vinyl pyridine and the like; and methyl vinyl ketone and the like. Preferred conjugated diolefin polymer synthetic rubbers which may be employed in the practice of this invention are polybutadiene, polyisoprene, butadiene/styrene copolymers (SBR) and butadiene/ acrylonitrile copolymers.

The nonconjugated polyene-containing synthetic rubbers which may be employed are copolymers of ethylene, at least one alphaolefin of the formula $H_2C = CHR$ wherein R is a $C_1-C_{10}$ alkyl radical (preferably propylene), and a nonconjugated polyene. The most preferred nonconjugated polyene-containing polymers include dicyclopentadiene, 5-ethylidene-2-norbornene and 1,4-hexadiene. Such
polymers may comprise minor amounts of other copolymerizable monomers having vinyl unsaturation.

Preferably the rubber is a blend of at least about
60 parts styrene/butadiene rubber with less than about 40
parts of a solution polymerized butadiene rubber or a
solution polymerized syndiotactic butadiene rubber.

The ground coal employed in the present invention
is preferably of a semi-bituminous metallurgical type,
although other types of coal may be used. The particle
size distribution of the coal employed is such that at
least about 90 weight percent will pass through a 25 mesh
screen, is preferably between about 25 and about 500
mesh, is more preferably between about 150 and about 500
mesh, and is most preferably between about 150 and about
300 mesh.

The composition of this invention may further
comprise conventional compounding and vulcanizing
ingredients such as carbon black, rubber processing or
softening oils, antioxidants, sulfur, zinc oxide,
accelerators and the like. Such ingredients are well
known to those skilled in the rubber compounding art.

The components of the composition of the present
invention are typically blended by means of any
conventional equipment, such as a two roll mill or
Banbury (TM) mixer, which will provide a thorough mixing
action. The ground coal is used in amounts between about
1 and about 70 parts per 100 parts rubber, preferably between about 1 and about 35 parts per 100 parts rubber, and most preferably between about 1 and about 20 parts per 100 parts rubber.

To manufacture tire treads, the composition of the present invention is homogeneously mixed with the required amounts of conventional additives in accordance with conventional methods. Subsequently, employing processes and devices which are likewise conventional, these mixtures are extruded (after the addition of customary auxiliary agents employed with rubber mixtures) into tire tread strips. These tread strips are then vulcanized, together with the other tire components customary in tire manufacture, such as sidewalls and carcasses, in likewise conventional presses.

Although most suitably employed as a tread composition for automobile tires, the composition of this invention may also be employed on other tires such as truck tires, airplane tires and the like.

The use of ground coal, particularly powdered metallurgical soft coal, as a partial non-reinforcing filler in the tire tread stock provides unexpected positive results in tire performance criteria as compared to other non-reinforcing fillers. Such unusual and unexpected positive results include a significantly lower rolling resistance for tires having ground coal-containing tread than for such tires that use only furnace black as filler. This effect is surprising because tires with tread that contain other non-reinforcing fillers (such as clay or ground crumb rubber) are known to have a high resistance to rolling. This high rolling resistance is believed to stem from the lower stock hardness and a lower complex modulus for rubber compositions containing non-reinforcing and/or semi-reinforcing fillers. Yet tires manufactured within the scope of the present invention exhibit comparatively low rolling resistances.

In addition, it has been unexpectedly found that tires employing the tread composition of this invention will exhibit more even ablative wear than tries having tread compositions employing another filler, such other fillers being more subject to gross particle ablation.

The present invention also produces several factory processing advantages. The use of ground coal as a partial non-reinforcing filler in the rubber tread compound imparts to the raw stock a lower viscosity at equal volume loading of a carbon black. Thus, the elastomeric compound will build up less heat when mixed, extruded, or calendered. When compounded into a rubber composition, the ground coal imparts improved dimensional stability in tubing and calendering when compared to an equal volume loading of carbon black. The lower processing temperature also imparts an increased shelf life to the processed non-vulcanized components. A lower heat buildup during processing imparts a lower propensity of the compounds to surface bloom.

## EXAMPLES

The following Examples are given as specific illustrations of the present invention. It should be understood, however, that the invention is not limited to the specific details set forth in the Examples. All parts in the Examples as well as in the other portions of the disclosure are on a weight basis unless otherwise specified.

In the Examples, the following methods were employed. Laboratory scale compounds were prepared in a type B Banbury (TM) internal mixer in which the ground coal was combined with the rubber and all other compounding ingredients. Rubber compounds for pneumatic tire building were prepared in a like manner, but on a full factory commercial scale -- mixing being done in a Type 27 Banbury (TM) internal mixer or similar type large scale factory mixer. Laboratory test compounds were vulcanized into various test specimens for physical property testing. The factory mixed compounds were further processed by extrusion into raw tread profiles or ribbons of tread stock for strip winding by tubing or calendering as recap stocks. Processed treads were used on various sizes and types of pneumatic tires. The tires were cured and tested for durability, rolling resistance and handling properties of various test wheel dynamometers and flat belt test machines. Tread wear, traction and rolling characteristics were attained on a motor vehicle and/or test trailer. Vehicle testing was conducted at a closed test track facility.

Laboratory compound vulcanizate strength characteristics were determined on an Instron Universal Tester in accordance with ASTM Method D412. Vulcanizate heat buildup was evaluated on a Goodrich Flexometer (TM) in accordance with ASTM D-623. The raw stock viscosity of unvulcanized rubber was determined following ASTM D-1646.

The hysteresis properties of the laboratory test compounds were determined with a Rheovibron Viscoelastometer on vulcanized specimens. Specimens were tested at 10 and 110 Hz at chamber temperatures of 25°C and 100°C respectively. Compound hysteresis was reported as Tan δ which relates to the rolling resistance of the tread compounds.

In the below described Examples and Comparative Experiments, the following definitions apply:

| | |
|---|---|
| SBR | Emulsion Styrene-Butadiene Rubber |
| Cis-BR | Cis-1,4-polybutadiene rubber |
| N-375 Black | High structure furnace carbon black |
| N-351 Black | Medium particle-high structure furnace carbon black |
| N-660 Black | Large particle general purpose furnace carbon black, low reinforcement |
| Ground Coal | Semi-bituminous coal ground to an average particle size of 300 mesh producing an aqueous slurry of a pH 4.5-6.5 |
| Aromatic Oil | Highly aromatic extender oil |
| Flexzone 7F(TM) | N-1,2-Dimethylbutyl-N'-Phenyl--p-phenylenediamine |
| Sunproof Wax(TM) | Wax blend antidegradient |
| SNS | N-t-butyl-2-benzothineyl sulfenamide |
| DPG | Diphenyl guanidine |
| Sulfur | Crystex insoluble sulfur |
| GS-30 Crumb Rubber | Non-reinforcing filler |

EXAMPLE 1 AND COMPARATIVE EXPERIMENTS A AND B

An elastomeric composition (Example 1) was prepared in a laboratory type B Banbury (TM) internal mixer. This composition comprised a blend of emulsion SBR and cis-polybutadiene 100 parts; 10 parts of ground metallurgical coal; 50 parts N-375 carbon black; and minor parts of zinc oxide, stearic acid, extender oil, antioxidant, sulfur and additives in the amounts listed in Table I below. This composition was vulcanized into various test specimens for physical property testing. The physical property test results are shown in Table II.

As a control composition (Comparative Experiment A), Example 1 was repeated except 55 parts N-375 carbon black were used in place of the 50 parts N-375 black and 10 parts ground metallurgical coal. The other compounding ingredients were the same as Example 1, such ingredients being listed in Table I. This composition was vulcanized into various test specimens for physical property testing. Testing results are shown in Table II.

As an additional control composition (Comparative Experiment B), an elastomer blend was prepared in a laboratory type B Banbury (TM) internal mixer. This composition was the same as Comparative Experiment A except an additional 5.0 parts of 30 mesh ground tread peels was also added to the mix. The ingredients of this sample are listed in Table I. This compound was vulcanized into various test specimens for physical property testing. Test results are shown in Table II.

| | Example 1 | Comparative Experiment A | Comparative Experiment B |
|---|---|---|---|
| SBR | 70.00 | 70.00 | 70.00 |
| Cis BR | 30.00 | 30.00 | 30.00 |
| N-375 Black | 50.00 | 55.00 | 55.00 |
| GS-30 Crumb Rubber | - | - | 5.00 |
| Ground Coal | 10.00 | - | - |
| Activated Zinc Oxide | 3.00 | 3.00 | 3.00 |
| Stearic Acid | 1.00 | 1.00 | 1.00 |
| Aromatic Oil | 16.75 | 16.75 | 16.75 |
| Flexzone 7F | 1.00 | 1.00 | 1.00 |
| Sunproof Wax | 0.50 | 0.50 | 0.50 |
| SNS | 1.30 | 1.30 | 1.30 |
| DPG | 0.30 | 0.30 | 0.30 |
| Sulfur | 1.80 | 1.80 | 1.80 |
| Total Batch Weight | 185.65 | 180.65 | 185.65 |

TABLE I

TABLE II
Cured Properties

| Cure 12 Min.@ 175°C | Example 1 | Comparative Experiment A | Comparative Experiment B |
|---|---|---|---|
| 300% Modulus | 1210 | 1320 | 1265 |
| Tensile | 2870 | 2995 | 2255 |
| % Elongation At Break | 545 | 535 | 455 |
| Durometer (Shore A) | 63 | 63 | 63 |
| Bashore Rebound 0°C | 35.4 | 35.2 | 34.2 |
| 25°C | 49.8 | 47.0 | 49.0 |
| Tan δ 25°C 10 Hz | .205 | .231 | .199 |
| 110 Hz | .265 | .282 | .283 |
| 100°C 10 Hz | .168 | .188 | .161 |
| 110 Hz | .203 | .216 | .217 |
| Goodrich Flex .175"/30#,100°C % °C | 27 | 30 | 34 |
| % Set | 5.9 | 7.1 | 8.6 |

A comparison of the Tan δ values observed, particularly at 110 Hz, indicates the desirable low rolling resistance exhibited by the composition of this invention. The low Tan δ observed is totally unexpected as tires with tread that contain other non-reinforcing filling are well known to suffer from a high resistance to rolling. However, in the practice of the present invention, it has been found that the addition of ground coal, a non-reinforcing filler, causes decreased resistance to rolling.

0224184

## EXAMPLE 2 AND COMPARATIVE EXPERIMENTS C, D, E AND F

A tire tread composition (Example 2) was prepared as described in Example 1, except that N-351 carbon black was used in replacing N-375 carbon black compound, and that slightly more aromatic oil was included. All other compounding ingredients were the same as Example 1 (see Table III). This compound was tested in the same manner as Example 1. The test results are reported in Table IV.

Several other similar compositions were prepared (Comparative Experiments C, D, E and F) except that none of such compositions contained ground coal. The components of such compositions are listed in Table III. The test results of the cured compositions are summarized in Table IV.

## TABLE III

| | Example 2 | Comparative Experiment C | Comparative Experiment D | Comparative Experiment E | Comparative Experiment F |
|---|---|---|---|---|---|
| SBR | 75.00 | 70.00 | 70.00 | 75.00 | 75.00 |
| Cis BR | 25.00 | 30.00 | 30.00 | 25.00 | 25.00 |
| N-351 Black | 50.00 | 55.00 | 55.00 | 55.00 | 50.00 |
| N-660 Black | - | - | - | - | 10.00 |
| GS-30 Crumb Rubber | - | - | 5.00 | - | - |
| Ground Coal | 10.00 | - | - | - | - |
| Activated Zinc Oxide | 3.00 | 3.00 | 3.00 | 3.00 | 3.00 |
| Stearic Acid | 1.00 | 1.00 | 1.00 | 1.00 | 1.00 |
| Aromatic Oil | 22.00 | 16.75 | 16.75 | 22.00 | 22.00 |
| Flexzone 7F | 1.00 | 1.00 | 1.00 | 1.00 | 1.00 |
| Sunproof Wax | 0.50 | 0.50 | 0.50 | 0.50 | 0.50 |
| SNS | 1.55 | 1.30 | 1.30 | 1.55 | 1.55 |
| DPG | 0.30 | 0.30 | 0.30 | 0.30 | 0.30 |
| Sulfur | 1.80 | 1.80 | 1.80 | 1.80 | 1.80 |
| Total Batch Weight | 191.15 | 180.65 | 185.65 | 185.15 | 191.15 |

0224184

TABLE IV

| Cure 12 Min.@ 175°C | Example 2 | Comparative Experiment C | Comparative Experiment D | Comparative Experiment E | Comparative Experiment F |
|---|---|---|---|---|---|
| 300% Modulus | 1565 | 1420 | 1375 | 1702 | 1890 |
| Tensile | 2194 | 2620 | 2055 | 2678 | 2461 |
| % Elongation At Break | 390 | 480 | 425 | 413 | 377 |
| Durometer (Shore A) | 62 | 63 | 63 | 62 | 63 |
| Tan δ 25°C 10 Hz | .168 | .184 | .198 | .195 | .198 |
|       110 Hz | .236 | .251 | .263 | .249 | .239 |
| 100°C 10 Hz | .109 | .132 | .152 | .131 | .112 |
|       110 Hz | .154 | .181 | .185 | .174 | .171 |
| Goodrich Flex .175"/30#,100°C % °C | 24 | 27 | 26 | 27 | 28 |
|       % Set | 3.7 | 5.2 | 6.2 | 3.9 | 4.2 |

Again, a comparison of the Tan δ values reveals that compositions of the present invention exhibits unexpectedly superior rolling resistance to prior art compositions not containing ground coal.

EXAMPLE 3 AND COMPARATIVE EXPERIMENT G

A tread compound (Comparative Experiment G) was mixed as a control stock in factory mixing equipment. This compound consisted of a blend of emulsion SBR and cis-polybutadiene 100 parts; N-375 carbon black 55 parts, and minor parts of zinc oxide, stearic acid, extender oil, antioxidant, sulfur and additives. This compound was extruded into a tread slab which was put upon proper carcass and then vulcanized into a 10R15 size light truck tire. The recipe and physical properties for the compound are found in Table V. The tire performance properties for each of the two representative tires featuring this control tread stock are found in Table VI.

A tread composition (Example 3) which included a blend of N-375 carbon black (50 parts) and ground metallurgical coal (10 parts) in place of 55 parts N-375 black was mixed on factory equipment. This compound was the same in every ingredient as that of Comparative Experiment G except for the above-mentioned black-ground coal blend. This compound was extruded into a tread slab which was put upon a proper carcass and vulcanized into a 10R15 size light truck tire. The recipe and physical properties for this compound are found in Table V. The tire performance properties for each of the two representative tires featuring this tread stock are found in Table VI.

TABLE V

TREAD COMPOUND

| | Comparative Experiment G | Example 3 |
|---|---|---|
| SBR | 70.00 | 70.00 |
| Cis BR | 30.00 | 30.00 |
| N-375 Black | 55.00 | 50.00 |
| Ground Coal | - | 10.00 |
| Activated Zinc Oxide | 3.00 | 3.00 |
| Stearic Acid | 1.00 | 1.00 |
| Aromatic Oil | 16.75 | 16.75 |
| Flexzone 7F | 1.00 | 1.00 |
| Sunproof Wax | .50 | .50 |
| SNS | 1.10 | 1.10 |
| DPG | .20 | .20 |
| Sulfur | 1.80 | 1.80 |
| Total Batch Weight | 180.35 | 185.35 |
| 300% Modulus | 1425 | 940 |
| Tensile | 2445 | 2180 |
| % Elongation At Break | 430 | 515 |
| Durometer Shore A | 63 | 61 |
| Bashore Rebound 0°C | 28.6 | 30.2 |
| 25°C | 38.2 | 42.8 |
| Goodrich Flex .175"/20#/100°C % °C | 26 | 25 |
| % Set | 6.1 | 5.9 |
| Viscosity ML4-100°C | 62-65 | 54-56 |

## TABLE VI

### TREAD COMPOUND

|  | Comparative Experiment G | Example 3 |
|---|---|---|
| Percent Wear (after 50,000 miles) | 56.1, 45,8 | 67.2, 63.0 |
| Traction Wet<br>20 MPH | 91, 94 High Load<br>90, 88 Low Load | 87, 91 High Load<br>90, 88 Low Load |
| 60 MPH | 122, 133 Low Load<br>115, 127 High Load | 114, 120 Low Load<br>107, 114 High Load |
| Dry<br>40 MPH | 91.7 95.3 Low Load<br>90.7, 91.3 High Load | 89.3, 90.7 Low Load<br>88.4, 91.7 High Load |
| Rolling Resistance (Newtons)<br>1408 lbs; 40 psi | 50.26, 49.73<br>46.5, 46.73 | 46.0, 49.73<br>44.64, 44.72 |
| Cornering Coefficient<br>630 lbs. 20 psi | .2409<br>.2493 | .2520<br>.2518 |
| 798 lbs. 40 psi | .2149<br>.2141 | .2212<br>.1184 |
| Aligning Torque<br>630 lbs. 30 psi | 7.7105<br>7.8165 | 8.0632<br>8.1326 |
| 798 lbs. 40 psi | 6.5027<br>6.843 | 6.960<br>6.9495 |
| MVSS 119 Stepped up load<br>Temp. | 89.5 Bd. Sep.<br>142°, 143°<br><br>95.90 Bd. Sep.<br>128°, 129° | 91.9 Bd. Sep.<br>116°, 118°<br><br>101.4 Bd. Sep.<br>131°, 134°<br><br>95.0 Bd. Sep.<br>125°, 129° |
| Wheel Test<br>TW-01<br>57 psi + BU<br>149% T&R Load<br>60 MPH | 420 Hrs. Trd. Sep.<br>450 Hrs. Comp. | 310 Hrs. Bd. Sep.<br>450 Hrs. Comp. |

A comparison of the rolling resistance values in Table VI shows once again the superior rolling resistance of tires having the tread composition of this invention. Table VI also shows the desirable tractive properties exhibited by the tires of this invention. Moreover, Table VI shows that the tires of this invention will exhibit a desirable tread lifetime.

Although the invention has been described with preferred embodiments, it is to be understood that variations and modifications may be employed as will be apparent to those skilled in the art. Such variations and modifications are to be considered within the scope of the claims appended hereto.

## Claims

-----

1.  A tire tread composition comprising:

   (a) a suitable rubber, and

   (b) between about 1 and about 70 parts ground coal per 100 parts rubber, said coal having a particle size distribution such that a t least 90 weight percent of said coal will pass through a 25 mesh screen.

2. A tire having a tread comprised of a composition comprising:

   (a) a suitable rubber, and

   (b) between about 1 and about 70 parts ground coal per 100 parts rubber, said coal having a particle size distribution such taht at least about 90 weight percent of such coal will pass through a 25 mesh screen.

3. The composition of claim 1 or the tire of claim 2 wherein said rubber is selected from the group consisting of natural rubber, conjugated diolefin polymer synthetic rubber, nonconjugated polyene-containing polymer synthetic rubber and mixtures thereof.

4. The composition of claims 1 - 3 or the tire of claims 2 or 3, wherein said rubber comprises at least one member selected from the group consisting of polybutadiene, polyisoprene, butadiene/styrene copolymer, butadiene/acrylonitrile copolymer, ethylene/propylene/dicyclopentadiene terpolymer, ethylene/propylene/5-ethylidene-2-norbornene terpolymer and ethylene/propylene/1,4-hexadiene terpolymer.

5. The compositions of anyone of claims 1 - 4 wherein the rubber is a blend comprising at least about 60 parts styrene/butadiene rubber and less than about 40 parts butadiene rubber.

6. The compositions of anyone of claims 1 to 5 wherein said ground coal is present in an amount from about 1 to about 35 parts per 100 parts rubber, preferably from about 1 to about 20 parts per 100 parts rubber.

7. The compositions of anyone of claims 1 to 6 wherein said ground coal has a particle size distribution of between about 25 and about 500 mesh, preferably between about 150 and about 500 mesh, and more preferably between about 150 and about 300 mesh.

8. The tire of anyone of claims 2 to 7 wherein said tire is an automobile tire.

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| X | GB-A-1 088 438  (MARATHON OIL)<br>* Claims 1,4,7 * | 1-7 | B 60 C    1/00<br>C 08 K    3/04 |
|   | --- | | |
| X | RUBBER ABSTRACTS, vol. 40, no. 12, 1962, pages 605-606, abstract no. 6832, Rubber and Plastics Research Association of Great Britain, Shawbury, GB; W.J. MUELLER et al.: "Coal fines - A new filler for low cost rubber and plastic compositions" * Whole abstract * | 1-7 | |
|   | --- | | |
| X | GB-A- 552 340  (A. McCULLOCH)<br>* Claim 1 * | 1-7 | |
|   | --- | | |
| A | US-A-4 477 611  (R.J. SPERLEY)<br><br>* Claim 1 * | | TECHNICAL FIELDS SEARCHED (Int. Cl.4)<br><br>B 60 C<br>C 08 K |
|   | ----- | | |

The present search report has been drawn up for all claims

| Place of search | Date of completion of the search | Examiner |
|---|---|---|
| THE HAGUE | 12-03-1987 | VAN HUMBEECK F.W.C. |